Europäisches Patentamt

European Patent Office

Office européen des brevets

(19)

(11) Veröffentlichungsnummer: **0 328 858 B1**

## (12) EUROPÄISCHE PATENTSCHRIFT

(45) Veröffentlichungstag der Patentschrift:
27.11.91 Patentblatt 91/48

(51) Int. Cl.⁵: **A01C 7/08, A01C 7/00**

(21) Anmeldenummer: 89100055.6

(22) Anmeldetag: 04.01.89

(54) Hauptverteiler für eine Verteilmaschine für granulatförmiges Saatgut und/oder Dünger.

(30) Priorität: 19.02.88 DE 3805148

(43) Veröffentlichungstag der Anmeldung:
23.08.89 Patentblatt 89/34

(45) Bekanntmachung des Hinweises auf die
Patenterteilung:
27.11.91 Patentblatt 91/48

(84) Benannte Vertragsstaaten:
DE FR GB SE

(56) Entgegenhaltungen:
DE-U- 8 708 456
FR-A- 2 339 327
US-A- 1 330 838

(73) Patentinhaber: ACCORD Landmaschinen
Heinrich Weiste & Co. GmbH
Coesterweg 42
W-4770 Soest (DE)

(72) Erfinder: Weiste, Helmut, Dipl.-Ing.
Siegmund-Schultze-Weg 12
W-4770 Soest (DE)

(74) Vertreter: Habbel, Hans-Georg, Dipl.-Ing.
Postfach 3429 Am Kanonengraben 11
W-4400 Münster (DE)

**Beschreibung**

Die Erfindung bezieht sich auf einen Hauptverteiler gemäß dem Oberbegriff des Patentanspruches 1.

Eine gattungsbildende Maschine ist in dem DE-U-8708456 beschrieben. Bei dieser bekannten Anordnung sind an den zu verschließenden Verteilerleitungen Absperrschieber angeordnet, über welche das diesen Verteilerleitungen zudosierte Gut über Rückführleitungen wieder in den Vorratsbehälter zurückgeleitet wird. Durch diese Maßnahme soll sichergestellt werden, daß auch bei Absperrung einzelner Abgänge im Verteilerkopf jeder offenen Saatleitung bzw. jedem Säschar die gleiche Menge Saatgut zugeleitet wird.

Aus der US-A-1330838 ist eine Drillmaschine bekannt, bei der Saatgut pneumatisch gefördert wird. Bei dieser bekannten Anordnung kann eine Dosierung der Saatgutmenge dadurch erfolgen, daß in dem Weg des Saatgutes ein Dosierschieber angeordnet ist. Bei dieser bekannten Einrichtung erfolgt kein komplettes Absperren eines Säorganes und die nicht dem Säschar zugeführte Saatgutmenge wird in den Vorratsbehälter zurückgefördert.

In der Praxis ist es bekannt, Saatgut und Dünger getrennt nebeneinander in je einer Tankhälfte der Verteilmaschine unterzubringen. Mit entsprechenden Dosiergeräten werden dann Saatgut und Dünger unabhängig voneinander exakt volumenmäßig dosiert und über einen gemeinsamen Verteilerkopf ausgetragen. Ein Rückführen der Mischung aus Saatgut und Dünger ist bei diesen Maschinen in den Vorratsbehälter nicht möglich.

In der Praxis ist es daher weiterhin bekannt, die zu sperrenden Verteilerleitungen mit einer Absperrvorrichtung zu versehen, die sich im Bereich der Verteilerleitung befindet, beispielsweise eine Schlauchklemme od. dgl. Da ein solches Absperren der Verteilerleitung nicht ständig erfolgt, mußte bei Öffnen der Verteilerleitung festgestellt werden, daß im Bereich der dort angeordneten Absperrmittel Verstopfungen innerhalb der Verteilerleitung auftreten, z.B. dadurch, daß hygroskopischer Dünger sich an der Wandung der Verteilerleitung festgesetzt hat. Auch bei granulatförmigem Saatgut mußten solche Verstopfungen registriert werden. Das führt zu ungleichmäßigen Saatleistungen.

Andererseits ist das Verschließen einer Verteilerleitung ohne Rückführung des Saatgutes z.B. bei Fahrgassenmarkierungen, erstrebenswert, da dadurch erreicht wird, daß die dem gesperrten Säorgan benachbarten Säorgane stärker mit Saatgut beschickt wurden, so daß im Randbereich der Fahrgassen eine dichtere Belegung mit Saatgut erfolgte. Hierdurch konnten teilweise die durch die Fahrgassenmarkierungen auftretenden Verluste ausgeglichen werden.

Der Erfindung liegt die Aufgabe zugrunde, die gattungsbildende Verteilmaschine so auszugestalten, daß ein Sperren einzelner Verteilerleitungen ohne Rückführung des dosierten Gutes in den Vorratsbehälter möglich ist, ohne daß dabei aber die Verteilerleitung in ihrem Querschnitt gedrosselt wird.

Diese der Erfindung zugrundeliegende Aufgabe wird durch die Kennzeichnenden Merkmale des Hauptanspruches gelöst.

Aus der DE-A-1782741 ist eine landwirtschaftliche Maschine zum Verteilen von Saatgut und Düngemitteln bekannt, bei welcher innerhalb der Verteileinrichtung ein in der Höhe verstellbarer Absperring angeordnet ist, der zur Schließung der über Rohrstutzen in die Verteileinrichtung mündenden Verteilerleitungen dient. Mit dieser bekannten Einrichtung ist eine Drosselung der Öffnung der Verteilerleitung zur Verteileinrichtung möglich, aber in dieser Literaturstelle wird nicht das vollständige Verschließen einzelner Verteilerleitungsmündungen bei vollständiger Öffnung anderer Verteilerleitungsmündungen beschrieben oder angedeutet.

Mit anderen Worten ausgedrückt, schlägt die Erfindung zur Lösung der ihr zugrundeliegenden Aufgabe vor, daß um vertikale Achsen ausgerichtete Verschlußklappen innerhalb des Verteilergehäuses vor den Mündungen der Verteilerleitungen angeordnet sind, wobei sich in der Verschlußstellung die Verschlußklappen vor die Mündung der Verteilerleitungen legen und in der Offenstellung in Verlängerung der Wandung der Verteilerleitung in das eigentliche Verteilergehäuse münden.

Ein Ausführungsbeispiel der Erfindung wird nachfolgend anhand der Zeichnung erläutert. Die Zeichnung zeigt dabei in

Fig. 1     eine Draufsicht auf ein Verteilergehäuse mit angeordneter Stellvorrichtung für die Verschlußmittel, in

Fig. 2     in größerem Maßstab den Anschluß der Verschlußmittel an die Stellmittel und in

Fig. 3     ebenfalls in größerem Maßstab eine Draufsicht auf die Verschlußmittel bei abgenommener Oberseite des Verteilergehäuses.

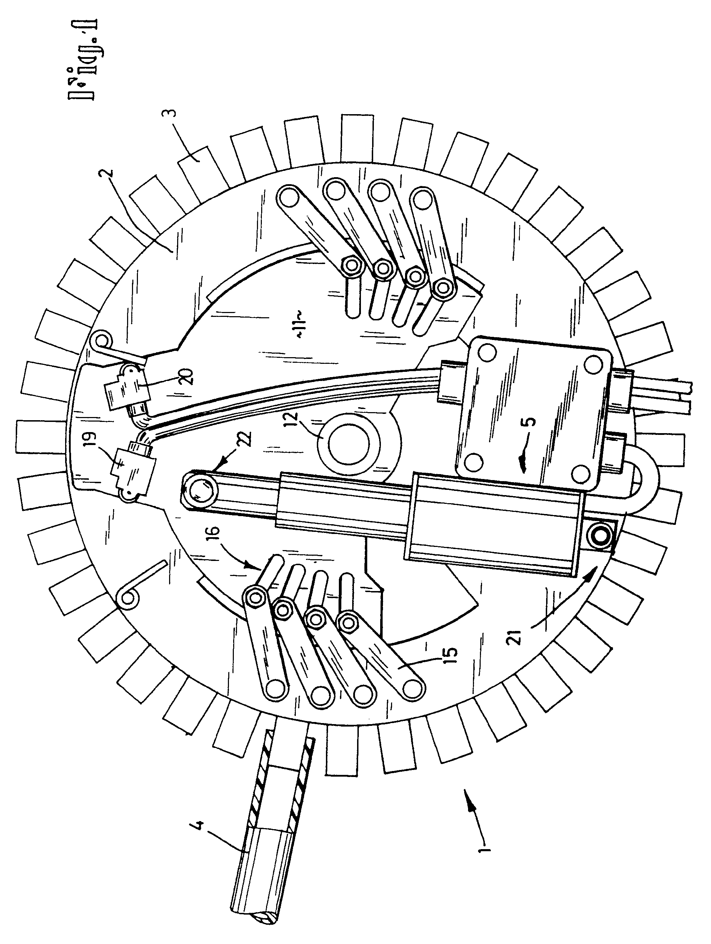

In den Zeichnungen ist mit 1 ein sogenannter Hauptverteiler bezeichnet, der im wesentlichen aus einem Verteilergehäuse 2 besteht, in das von unten das Zuführrohr für das granulatförmige Saatgut bzw. den Dünger führt. Dieses Zuführrohr ist in der Zeichnung nicht zu erkennen, da die Fig. 1 eine Draufsicht von oben zeigt.

2

An das Verteilergehäuse 2 schließen Verteilerleitungsanschlüsse 3 materialeinheitlich an, wobei auf diese Verteilerleitungsanschlüsse 3 Verteilerleitungen 4 aufgesetzt werden können, die üblicherweise aus einem Kunststoffschlauch bestehen.

Oberhalb der Wandung des Verteilergehäuses 2 ist eine Stellscheibe 11 vorgesehen, die schwenkbar um eine Mittelachse 12 gelagert ist und an die eine Stellvorrichtung 5 anschließt, die als elektrischer Stellmotor ausgebildet sein kann. Hierbei ist die Stellvorrichtung 5 einenendes bei 21 ortsfest am Verteilergehäuse 2 angeordnet und greift anderenendes bei 22 an der Stellscheibe 11 an und ist derart exzentrisch zur Mittelachse 12 angeordnet, daß bei einer Betätigung dieser Stellvorrichtung 5 die Stellscheibe 11 um einen Winkelbetrag gedreht oder geschwenkt wird.

In der Stellscheibe 11 sind Langlochschlitze 16 angeordnet. Weiterhin sind auf der Stellscheibe 11 Endschalter 19 und 20 vorgesehen, bei deren Kontakt mit entsprechenden Gegenschaltern die Stellvorrichtung in der einen oder anderen Bewegungsrichtung stillgesetzt wird.

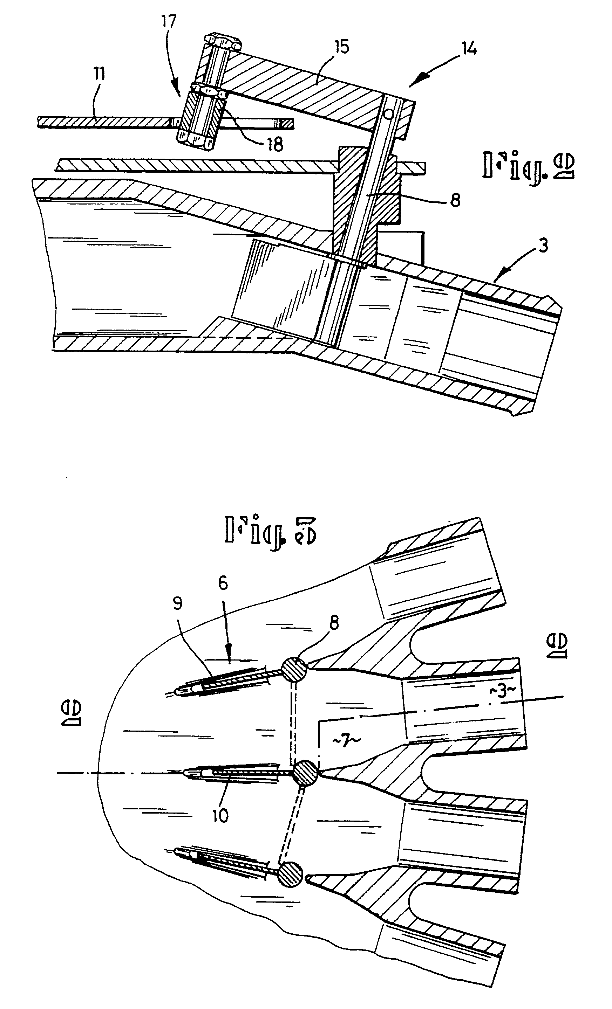

Aus Fig. 3 ist erkennbar, daß vor jeder Mündung 7 der Verteilerleitung 4 eine Sperrklappe 9 bzw. 10 angeordnet ist, von denen in Fig. 3 zwei Sperrklappen 9 und 10 dargestellt sind. Die Sperrklappen 9, 10 sind um Schwenkwellen 8 schwenkbar und legen sich in der gestrichelten Darstellungsweise in Fig. 3 vor die Mündung der Verteilerleitungsanschlüsse 3 und in der ausgezogenen Darstellungsweise stehen sie im wesentlichen fluchtend mit den Wandungen der Verteilerleitungsanschlüsse 3.

Die Schwenkwelle 8 ist an ihrem oberen Ende über Verbindungsmittel 14 mit der Stellscheibe 11 verbunden. Dies erfolgt bei der Darstellungsweise gemäß Fig. 2 durch einen Lenker 15, der drehfest mit der Schwenkwelle 8 verbunden ist und an seinem freien Ende einen Führungsbolzen 17 aufweist, der nach unten gerichtet ist und in den Langlochschlitz 16 eingreift, wobei er sich im Langlochschlitz 16 über einen Rollkörper 18 führt. Aus einem Vergleich der Fig. 1 und 2 ist erkennbar, daß bei einer Bewegung der Stellscheibe 11 nunmehr auch die Schwenkwelle 8 zwangsläufig gedreht wird, wobei aufgrund des durch den Lenker 15 gebildeten Hebelarmes und die Schrägstellung der Lenker 15 gegenüber einem Radialstrahl, nur eine kleine Bewegung der Stellscheibe 11 notwendig ist, um die nahezu 90° betragende Bewegung der Sperrklappen 9 und 10 zu realisieren.

Aus Fig. 1 ist weiterhin erkennbar, daß auf diese Weise jeweils mit einer Bewegung der Stellscheibe 11, vier nebeneinanderliegende Mündungen 7 von Verteilerleitungen 4 geschlossen oder geöffnet werden können, wobei weiterhin zweimal solche Stellvorrichtungen vorgesehen sind, um damit bei sehr breiten Maschinen gleichzeitig zwei Fahrgassen markieren zu können.

## Patentansprüche

1. Hauptverteiler (1) für eine pneumatisch arbeitende Verteilmaschine für granulatförmiges Saatgut und-/oder Dünger mit einem Verteilergehäuse (2), in das ein von einem Vorratsbehälter kommendes Zuführrohr von unten mündet und an das sich Verteilerleitungen (4) am Umfang verteilt angeordnet anschließen sowie mit einigen Verteilerleitungen (4) zugeordneten Absperrmitteln (6), um z.B. Fahrgassenmarkierungen durchzuführen, dadurch gekennzeichnet, daß

a) die Absperrmittel (6) im Verteilergehäuse (2) vor den dortigen Mündungen (7) der abgehenden Verteilerleitungen (4) angeordnet sind,

b) die Absperrmittel (6) als um im wesentliche vertikale Schwenkwellen (8) schwenkbare Sperrklappen (9, 10) ausgebildet sind,

c) die Absperrmittel durch eine für alle Absperrmittel (6) gemeinsame Stellvorrichtung (5) zu öffnen oder zu schließen sind.

2. Vorrichtung nach Anspruch 1, gekennzeichnet durch eine oberhalb des Verteilergehäuses (2) schwenkbar um eine vertikale Achse gelagerte Stellscheibe (11), an die die Stellvorrichtung (5) einenendes anschließt, die anderenendes ortsfest am Verteilergehäuse (2) angeordnet ist und Verbindungsmittel (14) zwischen der Stellscheibe (11) und den Schwenkwellen (8) vorgesehen sind, um bei einer Schwenkbewegung der Stellscheibe (11) die Sperrklappen (9, 10) zu betätigen.

3. Vorrichtung nach Anspruch 1 oder 2, dadurch gekennzeichnet, daß die Schwenkwellen (8) zur Oberseite des Verteilergehäuses verlängert sind, an ihren oberen Enden einen Lenker (15) tragen, der an seinem freien Ende einen Führungsbolzen (17) aufweist, der in einem Langlochschlitz (16) der Stellscheibe (11) geführt ist.

4. Vorrichtung nach Anspruch 3, dadurch gekennzeichnet, daß der Führungsbolzen (17) im Bereich des Langlochschlitzes (16) als Rollkörper (18) ausgebildet ist.

5. Vorrichtung nach einem oder mehreren der vorhergehenden Ansprüche, dadurch gekennzeichnet, daß die Stellvorrichtung (5) als elektrischer Stellmotor ausgebildet ist.

6. Vorrichtung nach einem oder mehreren der vorhergehenden Ansprüche, dadurch gekennzeichnet, daß die Stellscheibe (11) zwei Endschalter (19, 20) zur Steuerung der Bewegung des Stellmotors aufweist.

EP 0 328 858 B1

**Claims**

1. Main distributor (1) for a pneumatically operating distributing machine for granular seed and/or fertiliser, with a distributor housing (2) into which a feed pipe coming from a reservoir opens from below and to which distributor lines (4) arranged in distributed fashion on the periphery are connected, and with shut-off means (6) allocated to some distributor lines (4) in order, for example, to carry out lane marking operations, characterised in that

a) the shut-off means (6) are arranged in the distributor housing (2) in front of the openings (7), situated there, of the outgoing distributor lines (4),

b) the shut-off means (6) are designed as shut-off flaps (9, 10) swivellable about essentially vertical swivelling shafts (8),

c) the shut-off means can be opened or closed by an actuating device (5) common to all the shut-off means (6).

2. Device according to Claim 1, characterised in that an actuating disc (11), which is mounted above the distributor housing (2) in such a way as to be swivellable about a vertical axis, to one end of which the actuating device (5) is connected and which is arranged fixedly on the distributor housing (2) at the other end, and connecting means (14) between the actuating disc (11) and the swivelling shafts (8) are provided in order to actuate the shut-off flaps (9, 10) in the case of a swivelling movement of the actuating disc (11).

3. Device according to Claim 1 or 2, characterised in that the swivelling shafts (8) are extended towards the upper side of the distributor housing and, at their upper ends, carry a link (15) which has at its free end a guide pin (17) which is guided in an oblong slot (16) of the actuating disc (11).

4. Device according to Claim 3, characterised in that, in the region of the oblong slot (16), the guide pin (17) is designed as a rolling member (18).

5. Device according to one or more of the preceding claims, characterised in that the actuating device (5) is designed as an electric servomotor.

6. Device according to one or more of the preceding claims, characterised in that the actuating disc (11) has two limit switches (19, 20) for the purpose of controlling the movement of the servomotor.

**Revendications**

1. Distributeur principal (1) pour une machine d'épandage opérant pneumatiquement pour une semence et/ou un engrais de forme granulaire, comprenant un carter de distributeur (2) dans lequel un tuyau d'alimentation provenant d'un réservoir débouche de bas en haut et auquel se raccordent des conduites de distributeur (4) réparties sur la circonférence, et comprenant en outre des moyens obturateurs (6) associés à certaines conduites de distributeur (4), par exemple pour effectuer des marquages des passages de roues, caractérisé en ce que :

a) les moyens obturateurs (6) sont agencés dans le carter (2) du distributeur devant les orifices (7) des conduites (4) du distributeur qui se trouvent dans ce carter,

b) les moyens obturateurs (6) sont formés par des volets obturateurs (9, 10) qui peuvent pivoter autour d'arbres oscillants (8) sensiblement verticaux,

c) les moyens obturateurs sont mis en position d'ouverture ou de fermeture par un dispositif de commande (5) commun à tous les moyens obturateurs (6).

2. Dispositif selon la revendication 1, caractérisé par un disque de commande (11) tourillonnant au-dessus du carter (2) du distributeur autour d'un axe vertical, auquel le dispositif de commande (5) est relié à une extrémité, ce dispositif de commande étant monté à son autre extrémité sur le carter (2) du distributeur, en un point fixe, des moyens de liaison (14) étant prévus entre le disque de commande (11) et les arbres oscillants (8), pour actionner les volets obturateurs (9, 10) lorsque le disque de commande (11) décrit un mouvement d'oscillation.

3. Dispositif selon l'une des revendications 1 ou 2, caractérisé en ce que les arbres oscillants (8) sont prolongés vers la face supérieure du carter du distributeur, et portent à leur extrémité supérieure un bras (15) qui présente à son extrémité libre un doigt de guidage (17) qui coulisse dans une fente (16) en forme de boutonnière du disque de commande (11)

4. Dispositif selon la revendication 3, caractérisé en ce que le doigt de guidage (17) forme un galet (18) dans la région de la fente en forme de boutonnière (16).

5. Dispositif selon l'une des revendications précédentes, caractérisé en ce que le dispositif de commande (5) est constitué par un actionneur électrique.

6. Dispositif selon l'une des revendications précédentes, caractérisé en ce que le disque de commande

4

(11) présente deux interrupteurs de fin de course (19, 20) servant à commander le mouvement de l'actionneur.

Fig. 1

Fig. 2

Fig. 3